(19) Europäisches Patentamt
European Patent Office
Office européen des brevets

(11) **EP 3 172 879 B1**

(12) **EUROPEAN PATENT SPECIFICATION**

(45) Date of publication and mention
of the grant of the patent:
**17.10.2018 Bulletin 2018/42**

(21) Application number: **15741976.3**

(22) Date of filing: **17.07.2015**

(51) Int Cl.:
*H04L 25/03* (2006.01)      *H04L 27/38* (2006.01)

(86) International application number:
**PCT/EP2015/066489**

(87) International publication number:
**WO 2016/012382 (28.01.2016 Gazette 2016/04)**

(54) **METHOD FOR RECEIVING A DIGITAL SIGNAL IN A DIGITAL COMMUNICATION SYSTEM**

VERFAHREN ZUM EMPFANGEN EINES DIGITALEN SIGNALS IN EINEM DIGITALEN
KOMMUNIKATIONSSYSTEM

PROCÉDÉ DE RÉCEPTION D'UN SIGNAL NUMÉRIQUE DANS UN SYSTÈME DE
COMMUNICATION NUMÉRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2014 DE 102014214235**

(43) Date of publication of application:
**31.05.2017 Bulletin 2017/22**

(73) Proprietor: **Deutsches Zentrum für Luft- und
Raumfahrt e.V.
51147 Köln (DE)**

(72) Inventor: **DIMITROV, Svilen
81927 Muenchen (DE)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A2- 2 709 331        US-A1- 2004 184 563
US-A1- 2011 051 852**

• **DIMITROV SVILEN: "Iterative Cancellation of
Non-Linear Distortion Noise in Digital
Communication Systems", IEEE
TRANSACTIONS ON COMMUNICATIONS, IEEE
SERVICE CENTER, PISCATAWAY, NJ. USA, vol.
63, no. 6, 1 June 2015 (2015-06-01), pages
2325-2336, XP011584351, ISSN: 0090-6778, DOI:
10.1109/TCOMM.2015.2424241 [retrieved on
2015-06-12]**

**Description**

FIELD OF THE INVENTION

The present invention relates to a method for receiving a digital signal in a digital communication system and to a corresponding receiver performing this method.

STATE OF THE ART

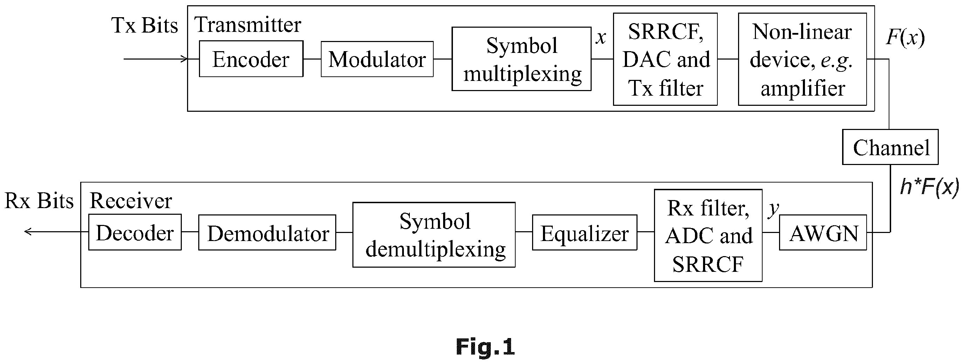

Commercial digital communication systems may include all common types such as mobile wireless communications, wireline and cable communications, satellite communications and optical wireless communications such as infrared and visible light communications (VLC). The block diagram of a digital communication scheme is presented in Fig. 1. This block diagram can be considered as representative for all types of commercial digital communication systems. In addition, it describes the forward as well as the return links, where the major differences are related to the data framing and signal multiplexing, as well as the resulting channel and distortion functions. In this invention, a generalized representation of the impairments is considered.

At the transmitter, the information-carrying bits are encoded by a forward error correction (FEC) code to provide protection from the impairments in the system. The encoded bits are mapped to symbols from a given constellation at the modulator. The modulation formats include, for example, amplitude and phase shift keying (APSK), quadrature amplitude modulation (QAM), pulse amplitude modulation (PAM), etc. The modulated symbols are multiplexed in accordance with the underlying transmission format. It is assumed that the receiver knows the modulation order on the received symbols for every user through information in the frame preamble or control channel information. In the forward link, the following transmission schemes are generally employed: time division multiplexing (TDM) and frequency division multiplexing (FDM), such as orthogonal FDM (OFDM). In the return link, time division multiple access (TDMA), orthogonal frequency division multiple access (OFDMA) and single-carrier frequency division multiple access (SC-FDMA) are generally employed. The signal to be transmitted, $x$, is then pulse shaped by means of a square root raised cosine filter (SRRCF) to ensure signal and spectrum integrity for radio frequency (RF) transmission. In optical communication systems, this digital pulse shaping block is generally omitted. Next, the signal is passed through a digital-to-analog converter (DAC) and possibly through a transmit filter, e.g. during up-conversion to the carrier frequency. The transmitter device can introduce non-linear distortion, due to the non-linear transfer function of the high power amplifier (HPA) in RF systems or the light emitting diode (LED) in optical systems. This distortion is particularly prominent with amplitude modulated signals. Here, the distortion is described through a general non-linear transfer function, $F(x)$. The signal is then passed through the channel. The channel can be RF wireline, RF wireless, optical fibre of optical wireless, and it is characterized by its impulse and frequency responses, introducing a linear distortion such as inter-symbol interference (ISI), a form of adjacent channel interference (ACI). In general, the channel can be a cascade of linear and non-linear devices as in relay systems with amplify and forward operation, such as in satellite communications. Without loss of generality, the signal at the receiver can be described through the cumulative linear and non-linear distortion functions, $h*F(x)$, where h is the cumulative impulse response, $F(x)$ is the cumulative non-linear transfer function, and * is the linear convolution operator. At the receiver, the signal is distorted by additive white Gaussian noise (AWGN), $n.$ As a result, the received signal, $y$, is obtained as follows:

$$y = h * F(x) + n. \qquad\qquad (1)$$

The receiver can include a receive filter, e.g. during down-conversion back to baseband. The signal is then passed through an analog-to-digital converter (ADC) and a matched SRRCF is applied. In optical systems, the digital matched filter is generally omitted. The transmitter and receiver are fine synchronized to the point that any introduced phase noise at the receiver can be counted towards the AWGN or towards the non-linear distortion noise. Next, an equalizer is applied to counter the channel effect and the linear distortion. Here, zero forcing (ZF) or minimum mean squared error (MMSE) criteria are generally applied. The symbols are then demultiplexed, demodulated and decoded, to obtain the received bits.

The non-linear distortion in the system introduces constellation warping and symbol clustering at the input of the demodulator. This interference is known as intermodulation interference (IMI), also a form of ACI. The IMI is dependent on the signal waveform, and therefore it contains useful information from the information-theoretic perspective. The interfering component is generally correlated with the transmitted symbols, when a low number of frequency carriers are used. Therefore, each constellation point at the receiver can be individually warped, scaled and rotated with respect to the nominal transmit symbol constellation at the modulator. In state-of-the-art systems, the equalizer performs a form of automatic gain control (AGC) where the received constellation symbols are collectively scaled by the same factor, in order to minimize the error with respect to the nominal transmit symbol constellation according to a criterion, such as the ZF or MMSE criteria. In addition, the demodulator and the decoder perform maximum likelihood (ML) detection with respect to the nominal transmit symbol constellation, whereby the receiver does not attempt to extract the useful information from the IMI, and the power of the interfering component is added to the noise power.

The following items summarize the functionality of state of the art of modern digital communication systems.

- The system contains a server station, i.e. a base station or a gateway.
- The system consists of several users, i.e. mobile stations or user terminals.
- The system is a point-to-multi-point or a multi-point-to-point system, i.e. forward or return link.
- The transmitter in the forward link is the server station, i.e. a base station or a gateway.
- The transmitter in the return link is the user equipment, i.e. a mobile station or a user terminal.
- The transmitter has the option to perform FEC encoding.
- The transmitter introduces linear and/or non-linear distortion through the employed filters and amplifiers. As a result of the linear distortion, ISI is introduced. As a result of the non-linear distortion, IMI is introduced, also known as non-linear distortion noise. The sum of the interferences is hereafter referred to as the interfering component.
- The receiver in the forward link is the user equipment, i.e. a mobile station or a user terminal.
- The receiver in the return link is the server station, i.e. a base station or a gateway.
- The receiver in the system introduces AWGN.
- The channel effect is minimized by sufficiently frequent channel estimation and equalization at the receiver.
- The transmitter and the receiver are fine synchronized to the point that any further introduced phase noise at the receiver can be counted towards the AWGN or the interfering component. As a result, the two distortion sources in the system are the AWGN and the interfering component.
- In state-of-the-art systems, signal detection is performed in the presence of the interfering component and the AWGN. Even though there is useful signal information in the interfering component, the receiver does not attempt to extract it.
- The interfering component and the AWGN reduce the probability of successful received signal detection, and as a result symbol or bit errors occur.
- The receiver performs equalization of the received symbols with respect to the nominal transmit symbol constellation.
- If FEC encoding has been performed at the transmitter, the receiver estimates the log-likelihood ratios (LLRs) for the received symbols with respect to the nominal transmit symbol constellation and then performs FEC decoding.
- Otherwise, the receiver performs maximum likelihood (ML) symbol detection with respect to the nominal transmit symbol constellation.

The receiver can extract the information in the interfering signal by means interference cancellation. Cancellation of the IMI has been first proposed in [1] for systems with OFDM. At the heart of this approach is the decomposition of the signal and the interfering component by means of the Bussgang theorem [2], where the output of the non-linear device is given as:

$$F(x) = Kx + d \, . \qquad (2)$$

Here, the output signal is an attenuated and possibly rotated replica of the information-carrying signal plus uncorrelated non-linear distortion noise. The scaling factor $K$ can be complex-valued or a real-valued based on the non-linear distortion function. It is obtained as the covariance of the transmitted and received symbols normalized by the average transmit symbol power.

Here, one factor is used to scale all the constellation symbols. A set of received symbols, e.g. a received frame, is buffered. In the first iteration of IMI cancellation, the symbols are detected and based on the estimate of the scaling factor from equation (2) an estimate of the interfering component is obtained and subtracted from the received buffered symbols. In a number of iterations, the newly obtained received symbols are detected and used to better estimate the interfering component which is then subtracted from the originally buffered received symbols. The output of the process comprises of the newly obtained received symbols after the iterations. Finally, the buffer is released and a new set of received symbols is processed.

In OFDM or systems with a large number of carriers, the interfering component is uncorrelated with the signal component. The IMI cancellation approach has been studied for coded signals in [3]. Furthermore, this approach has been adopted for systems with SC-FDMA in [4] with the coded system studied in [5]. However, the same estimator for the interfering component based on a single scaling factor for all the symbols from equation (2) is applied, which is suboptimum for SC-FDMA. This is because in SC-FDMA the interfering component is correlated with the signal component, and the appropriate modification of the receiver is proposed in this invention. Moreover, the proposed modified receiver can be applied also in systems with TDMA with a low number of carriers which suffer from a similar correlation between the interfering and intended signals.

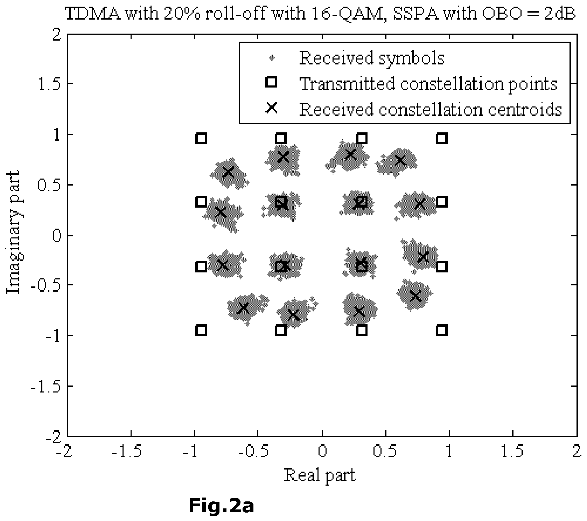

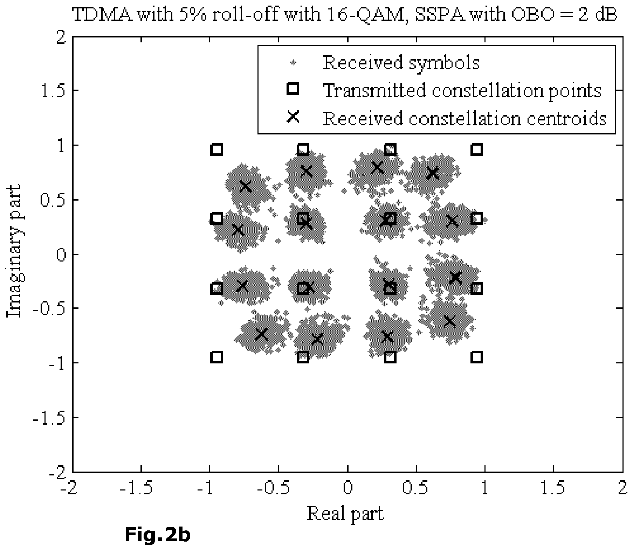

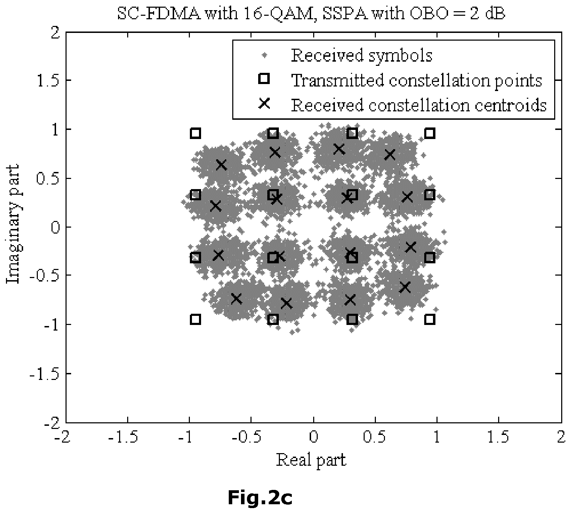

The aim of state-of-the-art communication systems to achieve higher data rates and capacity, and at the same time to use low cost consumer devices, results in the increase of the interference levels in the system. While successive interference cancellation (SIC) and parallel interference cancellation (PIC) are generally used to cope with the co-channel interference (CCI), the management of ACI can be carried out by means of physical layer signal processing techniques, exploiting the knowledge on the mechanisms that cause the ACI. For example, in state-of-the-art systems, a common approach to handle the ISI in the channel is equalization, where the knowledge of the channel, obtained for instance by channel estimation, is used to counter the ISI. The IMI caused generally by the non-linear amplifiers in the system is handled by means of power control, such as input and output back-off (OBO). This approach is well known to penalize the power efficiency of the system. A major shortcoming of state-of-the-art systems is that no measure is taken to extract the information carried in the interfering component, since the interference is treated as an additional component to the noise. However, the transfer characteristics of the non-linear devices in the system are generally well known and easily obtainable through measurements. Therefore, the knowledge of the mechanisms causing the IMI, can be used for interference cancellation. The known approaches for IMI cancellation are not suitable for waveforms, where the IMI is correlated with the signal, such as in TDMA and SC-FDMA. As a result, a suboptimum estimate for the interfering component is obtained as shown in the performance results hereinbelow. The suboptimum ML detection with respect to the transmitted constellation points is due to the fact that the received symbols have received constellation centroids which are individually warped, i.e. displaced in an irregular fashion away from the transmitted constellation points, in the non-linear channel with an HPA. As defined in [6], a received constellation centroid is the compilation of received constellation cluster center of mass conditioned to each constellation point. An illustration of the constellation warping is presented in Fig. 2 for TDMA with 20% roll-off (Fig. 2a), TDMA with 5% roll-off (Fig. 2b) and SC-FDMA (Fig. 2c). In state of the art systems, a single scaling factor for all the received symbols is used to model the scaling of the received symbols. This single scaling factor is defined in literature per iteration of cancellation, for example defined in eq. (7) from [4], as well as in eq. (6) and (12) from [5], and used in (8),(9),(10),(11) and (12) from [4], as well as in (7),(9),(10),(11) and (13) from [5]. Note that a similar suboptimum linear operation is also performed by the equalizer block.

The performance of the receiver can be improved by introducing individual scaling factors that transform the transmitted constellation points into received constellation centroids, by using the received constellation centroids as a reference for the ML detector, and by using the scaling factors in the iterative cancellation block. In this invention, a procedure for estimation of the scaling factors is proposed, the received constellation centroids are used as a reference of the ML detector, and the scaling factors are used in the iterative cancellation of the non-linear distortion noise. As a result, a better estimate of the interfering component is obtained, and as a result the gain of IMI interference cancellation is maximized in systems such as SC-FDMA and TDMA as shown in the performance results hereinbelow. A gain of 2 dB is obtained for SC-FDMA and TDMA with 20% roll-off with 64-QAM modulation relative to the case without IMI cancellation.

EP-A-2 709 331 relates to forward error correction decoder input computation in multi-carrier communication systems and describes a method to improve the estimate of the Log-Likelihood Ratios (LLRs) provided as input to a decoder in a multi-carrier communication system. The known method comprises more accurate computation of the reference points and the cluster variances used to compute the LLRs, namely the received constellation centroids and the variance of the received symbols around them.

US-A-2004/184563 deals with symbol decision adjustment in demodulator and discloses a method to adjust the decision lines in a demodulator to account for the distortions in received signaling at a receiver. The known method determines a centroid symbol location for a received symbol of a constellation different from the ideal symbol location due to distortion of the received symbol, and adjusts the decision line bounding, i.e. defining the received symbol based on this found centroid symbol location. The known method is used in a demodulator to obtain the demodulated symbols. After receiving a given symbol of a constellation which has undergone a distortion, the demodulator determines which symbol of the constellation the given received symbol actually is, based on a mapping programmed according to the decision lines bounding (defining) each symbol of the constellation. These lines are adjusted based upon the determined centroid symbol locations for each symbol.

## SUMMARY OF THE INVENTION

The present invention provides a receiver device and a method for receiving a digital signal in a digital communication system with linear and/or non-linear distortion, comprising the features of claim 1.

Individual embodiments of the invention are the subject matter of the dependent claims.

In this invention, two fundamental shortcomings of the aforementioned communication chain are addressed, and an improved receiver design is proposed. First, the received constellation centroids are individually estimated and used for signal detection, to provide a better estimate of the interfering component. Second, the signal receiving method estimates the interfering component by means of the estimated received constellation centroids, and it performs iterative cancellation of the IMI. As a result, the interference power is not treated as an addition to the noise power, but rather the useful signal information is extracted from it. Note that this approach is not to be mistaken for SIC or PIC, used generally for the cancellation of CCI, which terminate when all the symbols are processed, and the information from the first decoded symbols is used for the decoding of the rest. In the iterative IMI cancelling receiver proposed according to the invention, an estimate of the interfering component is obtained, and it is iteratively re-estimated and subtracted from the entire signal for the sake of an improved error rate, e.g. bit-error rate (BER). In general, only a few iterations are sufficient to significantly improve the performance of the receiver, resulting in an increased power and spectral efficiency as shown hereinbelow.

BRIEF DESCRIPTION OF THE DRAWINGS

The invention will be described hereinbelow referring to the drawing in which

Fig. 1     is a block diagram of a digital communication scheme,

Fig. 2     is an illustration of the constellation warping effects in 16-QAM, SSPA with OBO = 2 dB, including the transmitted constellation points, the received symbols and the received constellation centroids,

Fig. 3     is a block diagram of the proposed advanced receiver for cancellation of linear and non-linear distortion,

Fig. 4     is a block diagram of the estimator of the received constellation centroids and the respective $K_{CI}$,

Fig. 5     is a block diagram of the estimator of the distorted received symbols,

Fig. 6     is a non-linear transfer characteristic of an SSPA in KA band,

Fig. 7     is a comparison of standard and improved receivers for iterative ACI cancellation with QPSK,

Fig. 8     is a comparison of standard and improved receivers for iterative ACI cancellation with 8-PSK,

Fig. 9     is a comparison of standard and improved receivers for iterative ACI cancellation with 16-QAM,

Fig. 10    is a comparison of standard and improved receivers for iterative ACI cancellation with 64-QAM, and

Fig. 11    is a spectral efficiency vs. SNR requirement of standard and improved receivers for iterative ACI cancellation.

DESCRIPTION OF PREFERRED EMBODIMENTS

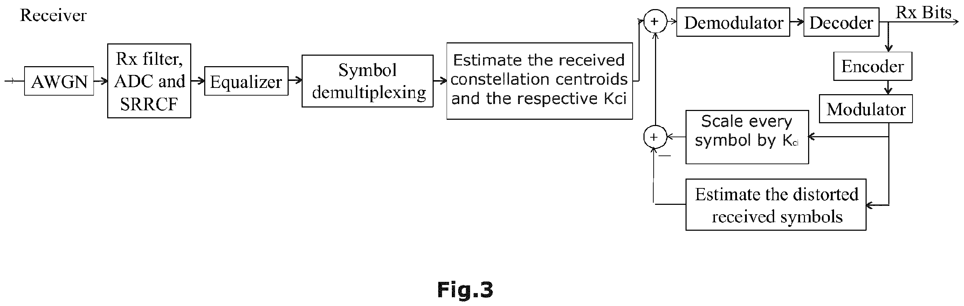

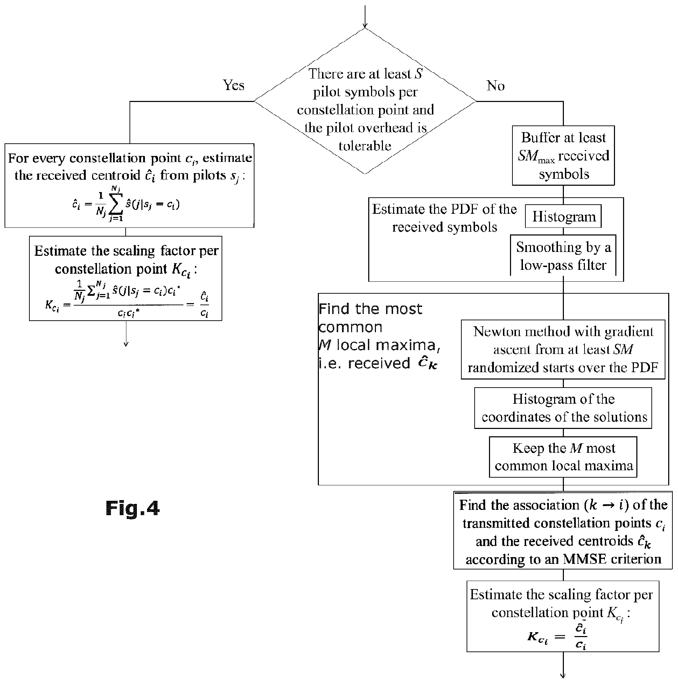

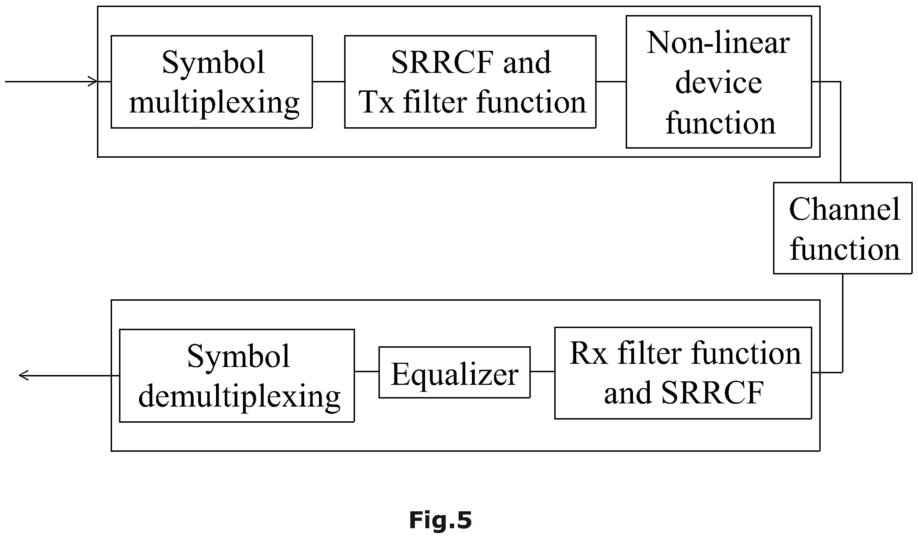

The block diagram of an example of a receiver employing the method according to the invention is presented in Fig. 3. Up to the symbol demultiplexing stage, the receiver according to this embodiment is similar to the state-of-the-art receiver from Fig. 1, described above. After the symbol demultiplexing stage, the received symbols are obtained and buffered for further processing. At this point, estimates of the received constellation centroids and the respective scaling factors, $K_{ci}$, for every constellation point, $c_i$, are calculated. These scaling factors translate the constellation point into a received centroid. The non-linear distortion results in warping and clustering of the received symbol constellation in the case of waveforms, where the interfering component is correlated with the signal, such as TDMA and SC-FDMA. As a result, it is important that every modified constellation centroid is estimated, and the estimate is used for calculation of the scaling factors, $K_{ci}$, for every constellation point. The scaling factors in the receiver are calculated for every constellation point, rather than as one scaling factor for the entire signal as assumed in equation (2) for the state-of-the-art receiver. The process for the estimation of the received centroids and the scaling factors is presented in Fig. 4, and it is elaborated below. The estimate of the received constellation centroids is used in the subsequent demodulator as a reference for the ML decoder or as a reference for the calculation of the LLRs in the case of a subsequently employed decoder. The decoded bits are used to obtain an estimate of the interfering component and cancel it from the signal in an iterative fashion. For this purpose, the bits are encoded and modulated to symbols, whereby every symbol is scaled by the respective scaling factor, $K_{ci}$. From the modulated symbols also an estimate of the distorted received symbols is obtained, using the knowledge of the distortion mechanisms along the communication chain. The block diagram of the estimator of the distorted received symbols is presented in Fig. 5, and it is elaborated below. The estimate of the received symbols is subtracted from the scaled symbols, and as a result a negated estimate of the distortion, $d$, from equation (2) is obtained. The negated estimate of the interfering signal is added to the originally buffered received symbols. Effectively, the estimate of the interfering component is subtracted from the received symbols, and the demodulation and possibly decoding stages are repeated. The iterations continue until a no change is observed at the output of the demodulator and decoder. It is shown hereinbelow that even one or two iterations can yield a significant gain.

The block diagram of the estimator of the received constellation centroids and the respective scaling factors is presented in Fig. 4. Here, the estimate of the modified constellation centroids at the receiver can be performed from pilot symbols in the frame, e.g. in the preamble, given that there are at least S pilot symbols per constellation point from each employed constellation and that the pilot overhead is tolerable. Here, the number S stands for the number of realizations for which sufficient convergence of the statistics is obtained, e.g. greater than 10. Since the association of the pilots to a constellation point is known at the receiver, for every constellation point the arithmetic average of the received symbols is computed given the knowledge that the corresponding transmitted signals belong to the constellation point of interest. Here, for a constellation point $c_i$, the $N_j$ transmitted pilots are denoted as $s_j$, while the received ones are given by $\hat{s}_j$. The received centroid is given as $\hat{c}_i$.

The scaling factor for every constellation point, $K_{ci}$, denotes the real-valued or complex-valued attenuation of the received centroid relative to the transmitted constellation point. It can be obtained as the covariance of the transmitted and received pilots divided by the power of the constellation point or simply by the ratio of received centroid and transmitted constellation point. The received centroids and the associated scaling factors are stored in a look-up table for every user, so they can be used in the subsequent processing blocks.

For higher order constellations, e.g. up to 256-APSK in the state-of-the-art satellite forward link, the preamble overhead might not be considered tolerable especially for short frame durations. In this case, a second method is proposed for the estimation of the received constellation centroids directly from the received symbols. This is motivated by the fact that the mean of the received symbol, which is the summation of the intended symbol, the interference and the AWGN, converges to the mean of the intended symbol and the interference, since the AWGN is zero-mean and uncorrelated from the rest. Since the receiver does not have an *a priori* knowledge of the received data, the true mean of every received cluster of symbols cannot be estimated. Therefore, the peaks of the probability density function (PDF) of the received symbols are considered as the received centroids. In order to estimate the received centroids, at least $SM_{max}$ received symbols are buffered in a queue, where $M_{max}$ is the largest constellation size in the system. From the buffered symbols, an estimate of the PDF of the received symbols is obtained. For real-valued symbols, the domain of the PDF is 1-dimensional, while for complex valued symbols the domain is 2-dimensional. A good estimate of the PDF can be obtained by means of a histogram which is afterwards smoothed by means of a low-pass filter. The bin size and the filter cut-off frequency are design parameters. Next, the most common $M$ local maxima, i.e. the received centroids, for an user constellation, where $M$ is the user constellation size, are computed. The search is performed through the Newton method with gradient ascent from at least $SM$ randomized starts over the PDF. The random selection of the initial starts from the domain of the PDF enables the search engine to find multiple local maxima on the PDF. The coordinates of the solutions are then binned in a histogram and the $M$ most common local maxima are kept as representation of the received constellation centroids. The association of the transmitted constellation points and the received estimated centroids can be performed as a search with an MMSE criterion, i.e. the association which yields the MMSE. After computation of the scaling factors, $K_{ci}$, which translate the transmitted constellation points into the received centroids, the received centroids and the scaling factors are stored in a look-up table for every user, so they can be used in the subsequent processing blocks.

The block diagram of the estimator of the distorted received symbols is presented in Fig. 5. The detected symbols in the current iteration are passed through the known processing blocks on the communication chain to obtain an estimate of the received symbols. First, the symbols are passed through the known multiplexing block according to the employed system type. Next, the known SRRCF and the transmitter filter function are applied, followed by the function of the non-linear device. The signal is then passed through the known channel function obtained by means of channel estimation at the receiver, i.e. by means of dedicated pilots in the frame. In the receiver chain, the known receiver filter function and the SRRCF are applied, followed by the known equalizer function to counter the linear distortion in the system. After symbol demultiplexing, the estimate of the received symbols is obtained which is then used to estimate the interfering component as previously described.

The method and receiver device proposed in this invention can be applied in all types of commercial digital communication systems. These include terrestrial mobile wireless communications, wireline and cable communications, satellite communications and optical wireless communications such as infrared communications and VLC. In addition, it can be applied both in the forward as well as in the return link. As shown, the method improves the power efficiency of the modulation and multiplexing/multiple access scheme. As a result, higher spectral efficiency is achieved which can be translated into higher throughput and lower cost per transmitted bit.

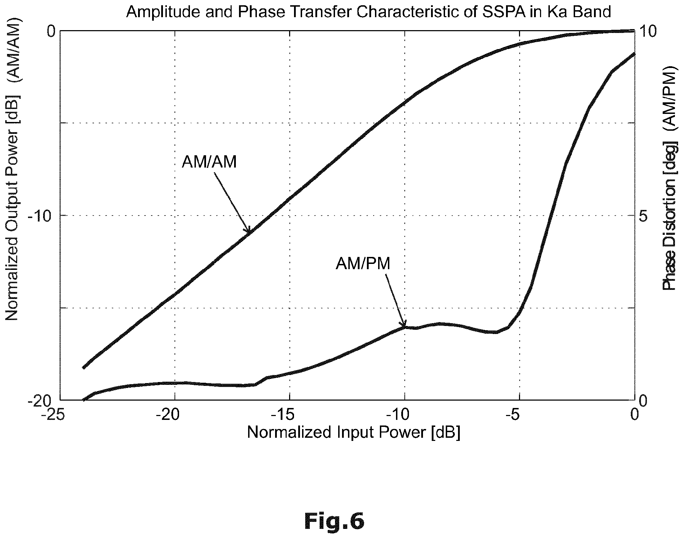

The receiver according to the invention was tested in a Monte Carlo simulation over a satellite return link for three different transmission schemes, i.e. multi-frequency TDMA (MF-TDMA) with 5% and 20% roll-off factors, as well as SC-FDMA and OFDMA. The non-linear solid state power amplifier (SSPA) of a user terminal is considered as a non-linear device at the transmitter. The input amplitude/output amplitude (AM/AM) and input amplitude/output phase (AM/PM) characteristics are presented in Fig. 6 for an SSPA in Ka band. Symbols from QPSK, 8-PSK,16-QAM constellations are used according to the modulation formats of the DVB-RCS2 standard. Also, 64-QAM is included to test the performance of the receiver for higher order constellations. Furthermore, transparent satellite architecture is assumed, where the non-linear distortion in the system is caused by the SSPA in the user terminal, when very low OBO is used.

In the Ka-band, there are two pieces of bandwidth of approximately 500 MHz. In a standard 4-color frequency reuse scheme, one bandwidth piece of 500 MHz is assigned per beam. In accordance with the processing capabilities of state-of-the-art hardware, the following spectrum assignment is considered. In MF-TDMA, 32 analog carriers are assumed. The tested 5% and 20% roll-off factors increase the bandwidth occupation of a carrier accordingly, and adjacent carriers are assumed without any further guard band. A time-frequency frame of 8192 resources is assumed with 256 time slots. On each analog carrier, 4 users are assigned, and a total of 128 users share the 8192 resources. In SC-FDMA and OFDMA, 4 analog carriers are assumed. Here, a 5% guard band is used to separate the analog carriers. Each analog carrier is subdivided in 2048 orthogonal digital subcarriers, resulting in a frequency frame of 8192 resources. On each analog carrier, 32 users are assigned, whereby 64 subcarriers are assigned to a user in a localized fashion, and a total of 128 users share the 8192 resources. As a result, the channel in the satellite link can be considered as flat-fading over the user bandwidth, and the channel gain can be equalized at the receiver gateway in a single-tap equalizer with ZF or MMSE in the form of AGC which is done collectively for all received symbols. Since no further linear distortion is introduced in the return link channel, i.e. there is no multi-path fading, a unity channel is assumed, in order to focus the testing and comparison on the management of the ACI.

In MF-TDMA, pulse shaping filters are applied at the transmitter and the receiver, and 5% and 20% roll-off factors are tested. Even though the filter at the transmitter is matched to the one at the receiver, there is a residual linear distortion in the form of ISI, due to the fact that the filter impulse response needs to be truncated for low roll-off-factors to reduce the processing complexity and latency. In SC-FDMA and OFDMA, no pulse shaping is applied due to the inherently confined spectra of orthogonal subcarriers.

The resulting ACI in the setup is primarily dominated by the IMI from the non-linear distortion, while also some residual ISI from the linear distortion is experienced for low roll-off factors in MF-TDMA. The receiver is tested against the standard state-of-the-art receiver for ACI cancellation [1,3,4,5], where the estimate of the interfering component is made through a single scaling factor from equation (2) based on the covariance of the transmitted and received symbols normalized to the average transmit symbol power. In the improved receiver, the estimation of the received constellation centroids and the respective scaling factors is performed directly from the received symbols, i.e. not from pilots, as outlined in Fig. 4.

In order to quantify the power efficiency penalty induced by the ACI, the total degradation (TD) metric is defined as follows:

$$TD\ [dB] = OBO + SNR_{ACI} - SNR_{nominal} \ . \hspace{2cm} (3)$$

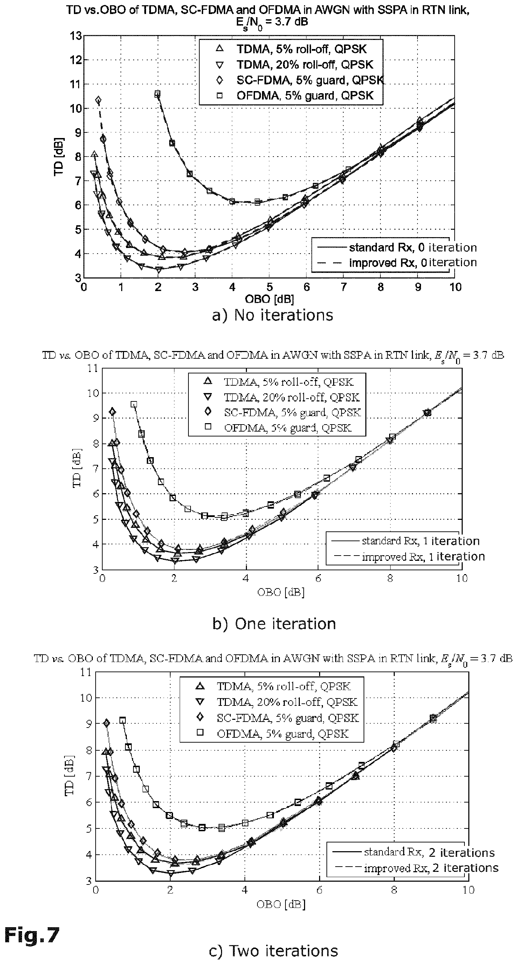

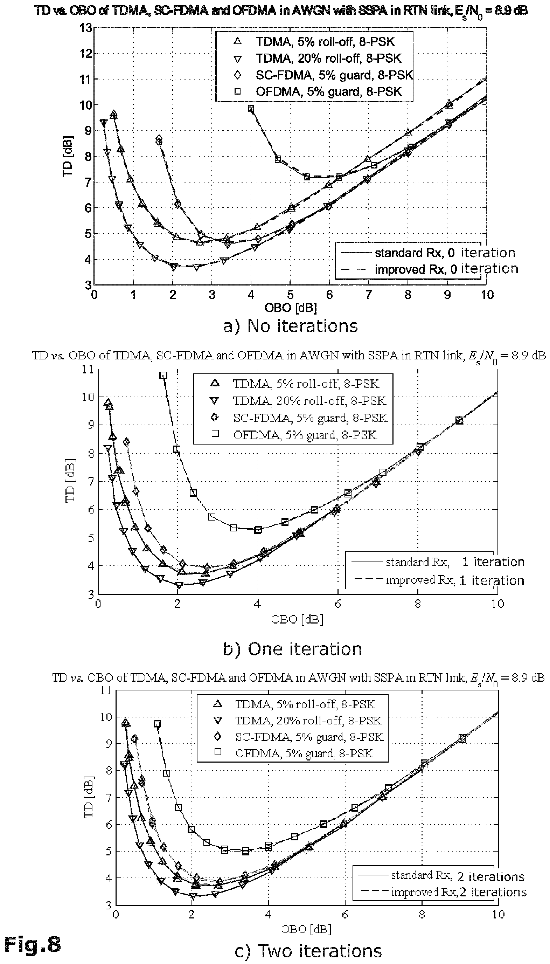

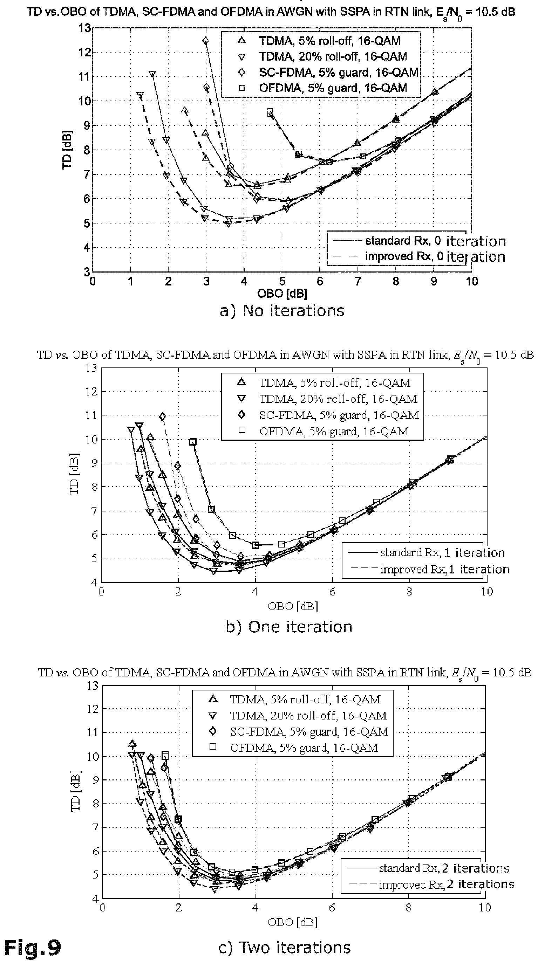

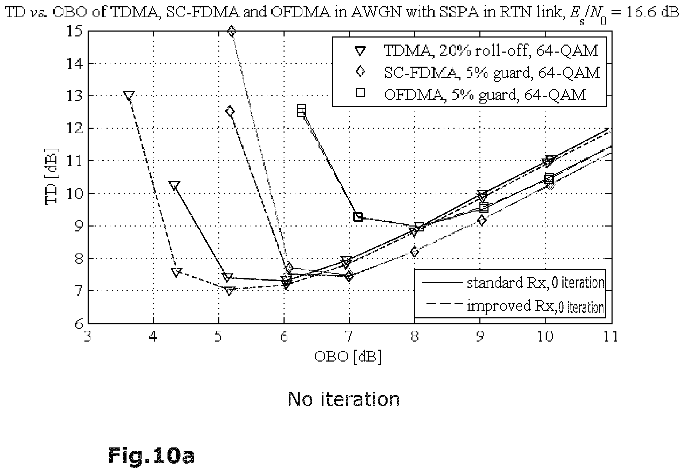

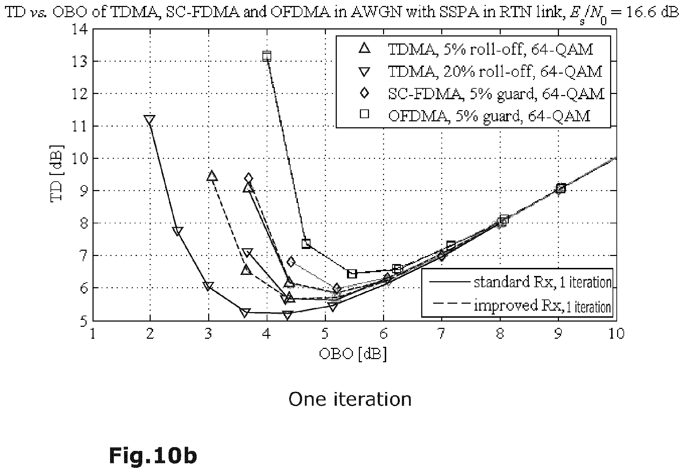

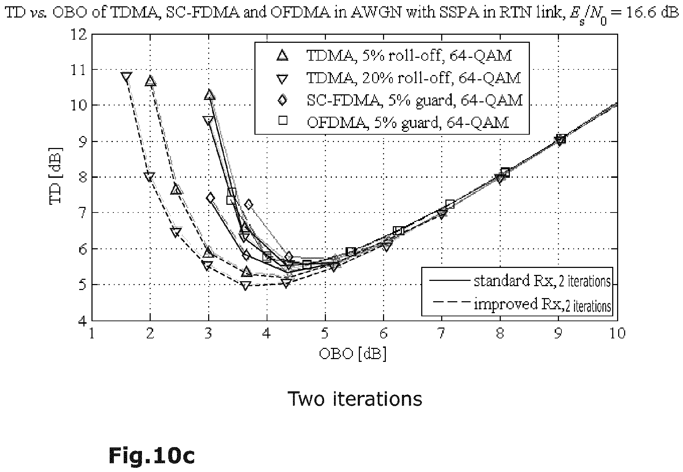

In addition to the OBO, the TD incorporates the signal-to-noise ratio (SNR) penalty on the achievable nominal SNR when only AWGN is present, represented by the difference of the SNR in the presence of the ACI and the nominal SNR. The results for the TD in QPSK, 8-PSK,16-QAM and 64-QAM are presented in Fig. 7, Fig. 8,Fig. 9 and Fig. 10 for nominal SNR values of 3.7 dB, 8.9 dB,10.5 dB and 16.6 dB, respectively. These nominal SNR values correspond to the SNR requirement of the modulation schemes to achieve a BER of $10^{-3}$ in the AWGN channel. The receivers are tested in three iteration scenarios for the cancellation of the ACI: no iterations/no ACI cancellation (similar to the state-of-the-art satellite system), 1 iteration and 2 iterations of ACI cancellation. The results demonstrate that the iterative receivers shift the minimum TD values to lower OBO values. When no iterations are performed, the improved receiver shows a lower TD for higher order constellations, e.g. up to 0.4 dB for 64-QAM with MF-TDMA with 20% roll-off, due to the better estimation of the received constellation centroids. When iterative ACI cancellation is employed, the improved receiver consistently outperforms the standard receiver for all OBO values.

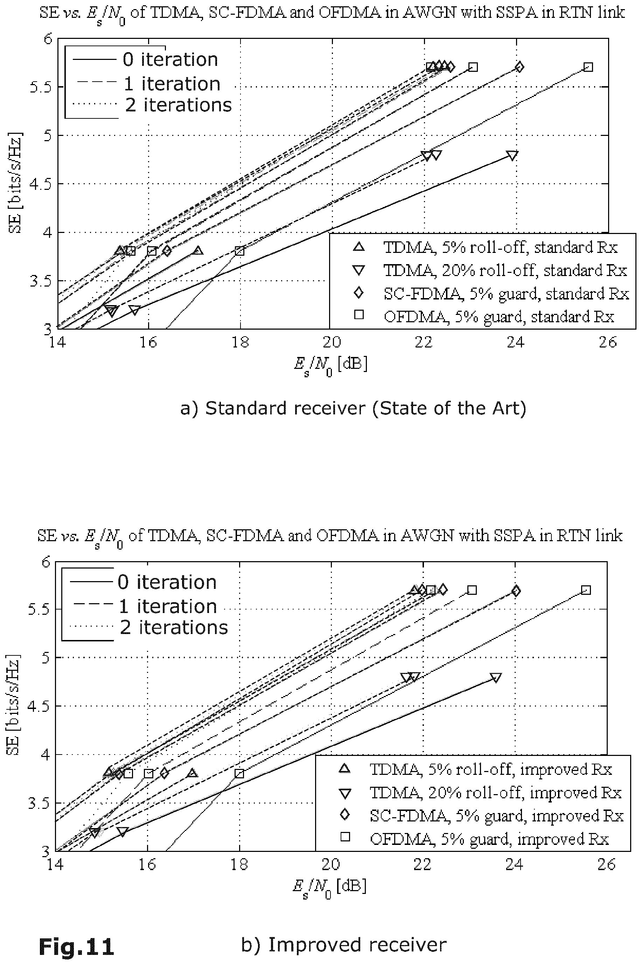

In order to quantify the gains in power efficiency, the improvement of the minimum TD is considered. Adding the TD values to the corresponding nominal SNRs, the spectral efficiency is presented as a function of the SNR requirement in Fig. 11 for the standard and improved receivers for 16-QAM and 64-QAM.. Focusing on the improved receiver, OFDMA is able to demonstrate a higher power efficiency gain of 1.1 - 3.4 dB (from QPSK to 64-QAM) for 2 iterations relative to no iterations and no ACI cancellation. In SC-FDMA, the gain is in the range of 0.3 - 2 dB. In MF-TDMA with 20% roll-off, the gain is in the range of 0.1 - 2 dB. In MF-TDMA with 5% roll-off, the gain is in the range of 0.2 - 1.8 dB (from QPSK to 16 QAM). The iterative receiver actually enables 64-QAM transmission for TDMA with 5% roll-off due to its ability to cancel the prohibitive residual ACI from the matched filtering.

The standard receiver is also shown to benefit from iterative ACI cancellation. It improves the performance of SC-FDMA and TDMA with 20% roll-off by 0.3 - 1.9 dB (from QPSK to 64-QAM), while 0.2 - 1.6 dB (from QPSK to 16-QAM) is the improvement for TDMA with 5% roll-off.

It is generally observed that 1 iteration of both the standard and the improved receivers is sufficient to obtain the major portion of the gain of the iterative ACI cancellation, while 2 iterations only contribute with an inconsiderable further improvement. Only OFDMA is able to show further gain for 2 iterations with the improved receiver. Also, the improved receiver is able to obtain more stable statistical estimates of the received constellation centroids from the received symbols, even if lower number of realizations is used, such as 64 symbols per user in the tested scenario.

The standard and improved receivers expectedly have a similar performance for QPSK and 8-PSK due to the constant envelope of the waveform. Also, OFDM does not distinguish between the two receivers due to the uncorrelated non-linear noise component. When the 2 receivers are compared for 2 iterations of ACI cancellation with 16-QAM, the improved receiver demonstrates a gain of 0.2 dB for SC-FDMA and TDMA. For 64-QAM, gains of 0.3 dB and 0.5 dB are shown for SC-FDMA and TDMA with 20% roll-off, respectively.

LIST OF ABBREVIATIONS

| | |
|---|---|
| ACI | adjacent channel interference |
| ADC | analog-to-digital converter |
| AGC | automatic gain control |
| AM/AM | input amplitude/output amplitude |
| AP/PM | input amplitude/output phase |
| APSK | amplitude and phase shift keying |
| AWGN | additive white Gaussian noise |
| BER | bit-error rate |
| CCI | co-channel interference |
| DAC | digital-to-analog converter |
| FDM | frequency division multiplexing |
| FEC | forward error correction |
| HPA | high power amplifier |
| IMI | intermodulation interference |
| ISI | inter-symbol interference |
| LLRs | log-likelihood ratios |
| MF-TDMA | multi-frequency TDMA |
| ML | maximum likelihood |
| MMSE | minimum mean squared error |
| OBO | output back-off |
| OFDM | orthogonal FDM |
| OFDMA | orthogonal frequency division multiple access |
| PAM | pulse amplitude modulation |
| PDF | probability density function |
| PIC | parallel interference cancellation |
| QAM | quadrature amplitude modulation |
| QPSK | quadrature phase shift keying |
| RF | radio frequency |
| SC-FDMA | single-carrier frequency division multiple access |
| SIC | successive interference cancellation |
| SNR | signal-to-noise ratio |
| SRRCF | square root raised cosine filter |
| SSPA | solid state power amplifier |
| TD | total degradation |
| TDM | time division multiplexing |
| TDMA | time division multiple access |
| VLC | visible light communications |
| ZF | zero forcing |

REFERENCES

[1] H. Chen and A. M. Haimovich, "Iterative Estimation and Cancellation of Clipping Noise for OFDM Signals", IEEE Communications Letters, vol. 7, no. 7, pp. 305-307, Jul. 2003.

[2] J. Bussgang, "Cross Correlation Function of Amplitude-Distorted Gaussian Signals", Research Laboratory for Electronics, Massachusetts Institute of Technology, Cambridge, MA, Technical Report 216, Mar. 1952.

[3] R. Djardin, M. Colas and G. Gelle, "Comparison of Iterative Receivers Mitigating the Clipping Noise of OFDM Based System", in Proc. of European Wireless Conference 2007, Paris, Apr. 2007.

[4] J. Gazda, P. Drotar, M. Deumal, D. Kocur and P. Galajda, "Simple Iterative Cancellation of Nonlinear Distortion in LDFMA systems", in Proc. of 14th International OFDM Workshop, Hamburg, Germany, 2009, pp. 133-137.

[5] J. Gazda, "Iterative receiver for nonlinearly distorted SC-FDMA transmission", in Proc. of 10th Scientific Conference of Young Researchers (SCYR 2010), Kosice, Slovak Republic, 2010.

[6] E. Casini, R. De Gaudenzi, and A. Ginesi, "DVB-S2 Modem Algorithms Design and Performance Over Typical Satellite Channels," International Journal of Satellite Communications and Networking, vol. 22, pp. 281-318, Jun. 2004.

**Claims**

1. Method for receiving a digital signal, comprising symbols at transmitted constellation points, in a digital communication systems with linear and/or non-linear distortion, comprising

   - receiving the digital signal transmitted via a transmission channel, wherein the received signal comprises received symbols and received constellation centroids associated with the received symbols, and wherein the received signal also includes an interfering component, and
   - processing the received signal for providing adjacent channel interference, ACI, cancellation, including intermodulation interference, IMI, and residual inter-symbol interference, ISI, cancellation,
   - wherein processing comprises iteratively performing maximum likelihood, ML, detection of the received symbols, resulting in estimated transmitted symbols,
   - wherein processing further comprises both estimation of the interfering component by means of the estimated transmitted symbols and subtraction of the estimated interfering component from the received signal,
   - wherein every received constellation centroid is estimated individually, and
   - - wherein the estimate of the received constellation centroids is used both in the estimation of the interfering component and as a reference for a maximum likelihood, ML, detection, in order to improve the performance of the interference cancellation.

2. Method according to claim 1, wherein the method is applicable in a receiver device for any digital communication system both for forward and return links.

3. Method according to claim 1 or 2, wherein the processing step comprises processing based on a first order decomposition of the received signal, wherein the first order decomposition comprises the sum of a scaled estimate of the transmitted signal and the interfering component.

4. Method according to claim 3, wherein the step of estimation of individual scaling factors comprises estimation of scaling factors transforming the transmitted constellation points into the received constellation centroids per used constellation.

5. Method according to claim 4, wherein the step of estimation of the received constellation centroids comprises estimation of the received constellation centroids based on transmitted pilot symbols known at the receiver device for every constellation point per used constellation by means of an arithmetic average of the received pilots per constellation point.

6. Method according to claim 3 or 4, wherein the step of estimation of the received constellation centroids comprises the following steps in the following order:

- estimation of the received constellation centroids based on buffered received symbols for every used constellation,
- estimation of the received constellation centroids based on a probability density function, PDF, estimate from the buffered received symbols,
- estimation of the received constellation centroids based on a probability density function, PDF, estimate through histogram and smoothing by a low-pass filter,
- estimation of the received constellation centroids based on Newton method and gradient ascent from multiple randomized starts over the probability density function, PDF,
- estimation of the received constellation centroids based on finding the most common local maxima representing the received centroids by means of a histogram, and
- estimation of the received constellation centroids based on association of the received constellation centroids and the transmitted constellation points.

7. Method according to any one of claims 4 to 6, wherein the step of estimation of scaling factors comprises estimation of the scaling factors transforming a transmitted constellation point into a received constellation centroid.

8. Method according to any one of claims 1 to 7, wherein the step of estimation of interfering component comprises estimation of the interfering component using information on every received constellation centroid.

9. Method according to any one of claims 1 to 7, wherein the step of estimation of interfering component comprises estimation of the interfering component as the subtraction of the detected estimate of the transmitted symbols scaled by the corresponding factors transforming the transmitted constellation points into received constellation centroids from the estimate of the symbols received through a known communication chain.

10. Method according to claim 9, wherein estimation of a set of received symbols is performed based on a set of known transmitted symbols passed through a known communication chain, including known symbol multiplexing structure of transmitted, filter functions of transmitted and receiver, non-linear device functions, channel functions and equalizer function of receiver in forward or return links.

**Patentansprüche**

1. Verfahren zum Empfangen eines Digitalsignals, das Symbole an übertragenen Konstellationspunkten umfasst, in einem digitalen Kommunikationssystem mit linearer und/oder nichtlinearer Verzerrung, umfassend

- Empfangen des Digitalsignals, das über einen Übertragungskanal übertragen wird, wobei das empfangene Signal empfangene Symbole und empfangene Konstellations-Zentroide aufweist, die den empfangenen Symbolen zugeordnet sind, und wobei das empfangene Signal ferner eine interferierende Komponente enthält, und
- Verarbeiten des empfangenen Signals zum Bewirken der Löschung einer Nachbarkanal-Interferenz, ACI, einschließlich einer Intermodulations-Interferenz, IMI, und einer Rest-Inter-Symbol-Interferenz, ISI,
- wobei das Verarbeiten das iterative Durchführen einer Maximum-Likelihood-, ML, Detektion der empfangenen Symbole umfasst, was in geschätzten übertragenen Symbolen resultiert,
- wobei das Verarbeiten ferner das Schätzen der interferierenden Komponente mittels der geschätzten übertragenen Symbole und die Subtraktion der geschätzten interferierenden Komponente von dem empfangenen Signal umfasst,
- wobei jeder empfangene Konstellations-Zentroid einzeln geschätzt wird, und
- wobei der Schätzwert der empfangenen Konstellations-Zentroiden beim Schätzen der interferierenden Komponente und als Referenz für eine Maximum-Likelihood-, ML, Detektion verwendet wird, um die Leistungsfähigkeit der Interferenz-Beseitigung zu verbessern.

2. Verfahren nach Anspruch 1, wobei das Verfahren in einer Empfängervorrichtung eines beliebigen digitalen Kommunikationssystems für Vorwärts- und Rückwärts-Übertragungsstrecken anwendbar ist.

3. Verfahren nach Anspruch 1 oder 2, bei dem der Verarbeitungsschritt einen Verarbeitungsvorgang umfasst, der auf einer Zerlegung erster Ordnung des empfangenen Signals basiert, wobei die Zerlegung erster Ordnung die Summe eines skalierten Schätzwerts des übertragenen Signals und der interferierenden Komponente umfasst.

4. Verfahren nach Anspruch 3, bei dem der Schritt des Schätzens einzelner Skalierungsfaktoren das Schätzen von Skalierungsfaktoren umfasst, die pro verwendeter Konstellation übertragene Konstellationspunkte in empfangene Konstellations-Zentroiden übersetzen.

5. Verfahren nach Anspruch 4, bei dem der Schritt des Schätzens der empfangenen Konstellations-Zentroiden umfasst: das pro verwendeter Konstellation erfolgende Schätzen der empfangenen Konstellations-Zentroiden auf der Basis übertragener Pilot-Symbole, die an der Empfängervorrichtung bekannt sind, für jeden Konstellationspunkt mit Hilfe eines arithmetischen Mittelwerts der empfangenen Piloten pro Konstellationspunkt.

6. Verfahren nach Anspruch 3 oder 4, bei dem der Schritt des Schätzens der empfangenen Konstellations-Zentroiden die folgenden Schritte in der folgenden Reihenfolge umfasst:

- Schätzen der empfangenen Konstellations-Zentroiden auf der Basis gepufferter empfangener Symbole für jede verwendete Konstellation,
- Schätzen der empfangenen Konstellations-Zentroiden auf der Basis eines Wahrscheinlichkeitsdichtefunktions-, PDF, Schätzwerts aus den gepufferten empfangenen Symbolen,
- Schätzen der empfangenen Konstellations-Zentroiden auf der Basis eines Wahrscheinlichkeitsdichtefunktions-, PDF, Schätzwerts durch ein Histogramm und eine Glättung mittels eines Tiefpassfilters,
- Schätzen der empfangenen Konstellations-Zentroiden auf der Basis des Newton-Verfahrens und des Gradienten-Anstiegs aus mehreren randomisierten Starts über die Wahrscheinlichkeitsdichtefunktion, PDF, hinweg,
- Schätzen der empfangenen Konstellations-Zentroiden auf der Basis des Auffindens der üblichsten lokalen Maxima, welche die empfangenen Zentroiden repräsentieren, mittels eines Histogramms, und
- Schätzen der empfangenen Konstellations-Zentroiden auf der Basis einer Zuordnung der empfangenen Konstellations-Zentroiden und der übertragenen Konstellationspunkte.

7. Verfahren nach einem der Ansprüche 4 bis 6, bei dem der Schritt des Schätzens von Skalierungsfaktoren ein Schätzen der Skalierungsfaktoren umfasst, die einen übermittelten Konstellationspunkt in einen empfangenen Konstellations-Zentroiden übersetzen.

8. Verfahren nach einem der Ansprüche 1 bis 7, bei dem der Schritt des Schätzens der interferierenden Komponente das Schätzen der interferierenden Komponente unter Verwendung von Information über jeden empfangenen Konstellations-Zentroiden umfasst.

9. Verfahren nach einem der Ansprüche 1 bis 7, bei dem der Schritt des Schätzens der interferierenden Komponente das Schätzen der interferierenden Komponente als Subtraktion des detektierten Schätzwerts der übertragenen Symbole, skaliert um die entsprechenden Faktoren, welche die übertragenen Konstellationspunkte in empfangene Konstellations-Zentroiden übersetzen, von dem Schätzwert der durch eine bekannte Kommunikationskette empfangenen Symbole umfasst.

10. Verfahren nach Anspruch 9, bei dem das Schätzen eines Satzes empfangener Symbole auf der Basis eines Satzes bekannter übertragener Symbole durchgeführt wird, die eine bekannte Kommunikationskette durchlaufen, einschließlich einer bekannten Symbol-Multiplex-Struktur des Senders, Filterfunktionen des Senders und des Empfängers, nichtlinearer Vorrichtungsfunktionen, Kanal-Funktionen und Entzerrer-Funktionen des Empfängers auf Vorwärts- oder Rückwärts-Übertragungsstrecken.

**Revendications**

1. Procédé pour recevoir un signal numérique, comprenant des symboles en des points de constellation transmis, dans un système de communication numérique avec une distorsion linéaire et/ou non linéaire, comprenant :

- la réception du signal numérique transmis par l'intermédiaire d'un canal de transmission, le signal reçu comprenant des symboles reçus et des centroïdes de constellation reçus associés aux symboles reçus, et le signal reçu comprenant également une composante de brouillage, et
- le traitement du signal reçu pour produire une annulation de brouillage de canal adjacent, ACI, comprenant une annulation de brouillage d'intermodulation, IMI, et une annulation de brouillage inter-symboles résiduelle, ISI,
- dans lequel le traitement comprend la réalisation itérative d'une détection de probabilité maximale, ML, des symboles reçus, aboutissant à des symboles transmis estimés,
- dans lequel le traitement comprend en outre à la fois l'estimation de la composante de brouillage à l'aide des symboles transmis estimés et la soustraction de la composante de brouillage estimée à partir du signal reçu,
- dans lequel chaque centroïde de constellation reçu est estimé individuellement, et
- dans lequel l'estimation des centroïdes de constellation reçus est utilisée à la fois dans l'estimation de la composante de brouillage et comme une référence pour une détection de probabilité maximale, ML, de façon à améliorer la réalisation de l'annulation de brouillage.

2. Procédé selon la revendication 1, dans lequel le procédé peut être appliqué dans un dispositif récepteur pour tout système de communication numérique à la fois pour des liaisons d'aller et de retour.

3. Procédé selon la revendication 1 ou 2, dans lequel l'étape de traitement comprend un traitement basé sur une décomposition du premier ordre du signal reçu, la décomposition du premier ordre comprenant la somme d'une estimation mise à l'échelle du signal transmis et de la composante de brouillage.

4. Procédé selon la revendication 3, dans lequel l'étape d'estimation de facteurs d'échelle individuels comprend l'estimation de facteurs d'échelle transformant les points de constellation transmis en centroïdes de constellation reçus par constellation utilisée.

5. Procédé selon la revendication 4, dans lequel l'étape d'estimation des centroïdes de constellation reçus comprend l'estimation des centroïdes de constellation reçus sur la base de symboles pilotes transmis connus dans le dispositif récepteur pour chaque point de constellation par constellation utilisée à l'aide d'une moyenne arithmétique des pilotes reçus par point de constellation.

6. Procédé selon la revendication 3 ou 4, dans lequel l'étape d'estimation des centroïdes de constellation reçus comprend les étapes suivantes, dans l'ordre suivant :

- estimation des centroïdes de constellation reçus sur la base de symboles reçus mis en mémoire tampon pour chaque constellation utilisée,
- estimation des centroïdes de constellation reçus sur la base d'une estimation de fonction de densité de probabilité, PDF, à partir des symboles reçus mis en mémoire tampon,
- estimation des centroïdes de constellation reçus sur la base d'une estimation de fonction de densité de probabilité, PDF, par un histogramme et d'un lissage par un filtre passe-bas,
- estimation des centroïdes de constellation reçus basée sur une méthode de Newton et une ascension en pente à partir de multiples départs aléatoires sur la fonction de densité de probabilité, PDF,
- estimation des centroïdes de constellation reçus sur la base de la découverte des maxima locaux les plus communs représentant les centroïdes reçus à l'aide d'un histogramme, et
- estimation des centroïdes de constellation reçus sur la base de l'association des centroïdes de constellation reçus et des points de constellation transmis.

7. Procédé selon l'une des revendications 4 à 6, dans lequel l'étape d'estimation des facteurs d'échelle comprend l'estimation des facteurs de mise à l'échelle transformant un point de constellation transmis en un centroïde de constellation reçu.

8. Procédé selon l'une des revendications 1 à 7, dans lequel l'étape d'estimation de composante de brouillage comprend l'estimation de la composante de brouillage à l'aide d'une information concernant chaque centroïde de constellation reçu.

9. Procédé selon l'une des revendications 1 à 7, dans lequel l'étape d'estimation de composante de brouillage comprend l'estimation de la composante de brouillage comme étant la soustraction de l'estimation détectée des symboles transmis mis à l'échelle par les facteurs correspondants transformant les points de constellation transmis en centroïdes de constellation reçus à partir de l'estimation des symboles reçus par une chaîne de communication connue.

10. Procédé selon la revendication 9, dans lequel l'estimation d'un ensemble de symboles reçus est effectuée sur la base d'un ensemble de symboles transmis connus qui sont passés à travers une chaîne de communication connue, comprenant une structure de multiplexage de symboles connus de transmission, des fonctions de filtre de transmission et de récepteur, des fonctions de dispositif non linéaire, des fonctions de canal et une fonction d'égaliseur de récepteur dans des liaisons d'aller ou de retour.

Tx Bits | Transmitter

Encoder — Modulator — Symbol multiplexing $\quad x$ | SRRCF, DAC and Tx filter | Non-linear device, *e.g.* amplifier $\quad$ *F(x)*

Channel

*h\*F(x)*

Rx Bits | Receiver

Decoder — Demodulator — Symbol demultiplexing — Equalizer — Rx filter, ADC and SRRCF $\quad y$ | AWGN

**Fig.1**

**Fig.2a**

TDMA with 5% roll-off with 16-QAM, SSPA with OBO = 2 dB

Legend:
- Received symbols
- Transmitted constellation points
- Received constellation centroids

**Fig.2b**

EP 3 172 879 B1

EP 3 172 879 B1

Fig.2c

Receiver

→ AWGN → Rx filter, ADC and SRRCF → Equalizer → Symbol demultiplexing → Estimate the received constellation centroids and the respective Kci → (+) → Demodulator → Decoder → Rx Bits

Decoder → Encoder → Modulator

Modulator → Scale every symbol by $K_{ci}$ → (+) → 

Modulator → Estimate the distorted received symbols → 

**Fig.3**

EP 3 172 879 B1

**Fig.4**

Decision diamond: "There are at least $S$ pilot symbols per constellation point and the pilot overhead is tolerable"

Yes branch:

For every constellation point $c_i$, estimate the received centroid $\hat{c}_i$ from pilots $s_j$:

$$\hat{c}_i = \frac{1}{N_j}\sum_{j=1}^{N_j} \hat{s}(j|s_j = c_i)$$

Estimate the scaling factor per constellation point $K_{c_i}$:

$$K_{c_i} = \frac{\frac{1}{N_j}\sum_{j=1}^{N_j} \hat{s}(j|s_j = c_i)c_i^*}{c_i c_i^*} = \frac{\hat{c}_i}{c_i}$$

No branch:

Buffer at least $SM_{max}$ received symbols

Estimate the PDF of the received symbols — Histogram — Smoothing by a low-pass filter

**Find the most common $M$ local maxima, i.e. received $\hat{c}_k$**

Newton method with gradient ascent from at least $SM$ randomized starts over the PDF

Histogram of the coordinates of the solutions

Keep the $M$ most common local maxima

Find the association ($k \to i$) of the transmitted constellation points $c_i$ and the received centroids $\hat{c}_k$ according to an MMSE criterion

Estimate the scaling factor per constellation point $K_{c_i}$:

$$K_{c_i} = \frac{\bar{c}_i}{c_i}$$

EP 3 172 879 B1

```
┌──────────────────────────────────────────────────────────────────────┐
│  ┌──────────────────┐   ┌──────────────────┐   ┌──────────────────┐   │
│  │     Symbol       │   │    SRRCF and     │   │   Non-linear     │   │
├─▶│   multiplexing   ├──▶│ Tx filter function├──▶│     device       ├── │
│  │                  │   │                  │   │    function      │   │
│  └──────────────────┘   └──────────────────┘   └──────────────────┘   │
└──────────────────────────────────────────────────────────────────────┘
```

Non-linear
device
function

Channel
function

Symbol
demultiplexing    Equalizer    Rx filter function
and SRRCF

**Fig.5**

Fig.6

TD vs.OBO of TDMA, SC-FDMA and OFDMA in AWGN with SSPA in RTN link, $E_s/N_0 = 3.7$ dB

a) No iterations

TD vs. OBO of TDMA, SC-FDMA and OFDMA in AWGN with SSPA in RTN link, $E_s/N_0 = 3.7$ dB

b) One iteration

TD vs. OBO of TDMA, SC-FDMA and OFDMA in AWGN with SSPA in RTN link, $E_s/N_0 = 3.7$ dB

**Fig.7**

c) Two iterations

TD vs. OBO of TDMA, SC-FDMA and OFDMA in AWGN with SSPA in RTN link, $E_s/N_0 = 8.9$ dB

a) No iterations

TD vs. OBO of TDMA, SC-FDMA and OFDMA in AWGN with SSPA in RTN link, $E_s/N_0 = 8.9$ dB

b) One iteration

TD vs. OBO of TDMA, SC-FDMA and OFDMA in AWGN with SSPA in RTN link, $E_s/N_0 = 8.9$ dB

**Fig.8**

c) Two iterations

TD vs. OBO of TDMA, SC-FDMA and OFDMA in AWGN with SSPA in RTN link, $E_s/N_0$ = 10.5 dB

a) No iterations

TD vs. OBO of TDMA, SC-FDMA and OFDMA in AWGN with SSPA in RTN link, $E_s/N_0$ = 10.5 dB

b) One iteration

TD vs. OBO of TDMA, SC-FDMA and OFDMA in AWGN with SSPA in RTN link, $E_s/N_0$ = 10.5 dB

**Fig.9**

c) Two iterations

TD *vs.* OBO of TDMA, SC-FDMA and OFDMA in AWGN with SSPA in RTN link, $E_s/N_0 = 16.6$ dB

No iteration

**Fig.10a**

TD *vs.* OBO of TDMA, SC-FDMA and OFDMA in AWGN with SSPA in RTN link, $E_s/N_0 = 16.6$ dB

One iteration

**Fig.10b**

TD *vs.* OBO of TDMA, SC-FDMA and OFDMA in AWGN with SSPA in RTN link, $E_s/N_0 = 16.6$ dB

Two iterations

**Fig.10c**

SE *vs.* $E_s/N_0$ of TDMA, SC-FDMA and OFDMA in AWGN with SSPA in RTN link

a) Standard receiver (State of the Art)

SE *vs.* $E_s/N_0$ of TDMA, SC-FDMA and OFDMA in AWGN with SSPA in RTN link

**Fig.11**     b) Improved receiver

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2709331 A

- US 2004184563 A

### Non-patent literature cited in the description

- **H. CHEN ; A. M. HAIMOVICH.** Iterative Estimation and Cancellation of Clipping Noise for OFDM Signals. *IEEE Communications Letters,* July 2003, vol. 7 (7), 305-307
- Cross Correlation Function of Amplitude-Distorted Gaussian Signals. **J. BUSSGANG.** Research Laboratory for Electronics. Massachusetts Institute of Technology, March 1952, vol. 216
- **R. DJARDIN ; M. COLAS ; G. GELLE.** Comparison of Iterative Receivers Mitigating the Clipping Noise of OFDM Based System. *Proc. of European Wireless Conference,* April 2007

- **J. GAZDA ; P. DROTAR ; M. DEUMAL ; D. KOCUR ; P. GALAJDA.** Simple Iterative Cancellation of Nonlinear Distortion in LDFMA systems. *Proc. of 14th International OFDM Workshop,* 2009, 133-137
- **J. GAZDA.** Iterative receiver for nonlinearly distorted SC-FDMA transmission. *Proc. of 10th Scientific Conference of Young Researchers (SCYR 2010),* 2010
- **E. CASINI ; R. DE GAUDENZI ; A. GINESI.** DVB-S2 Modem Algorithms Design and Performance Over Typical Satellite Channels. *International Journal of Satellite Communications and Networking,* June 2004, vol. 22, 281-318